# EUROPÄISCHE PATENTSCHRIFT

(11) **EP 1 040 028 B1**
(45) Veröffentlichungstag und Bekanntmachung des Hinweises auf die Patenterteilung: **04.01.2006**
(21) Anmeldenummer: 98954315.2
(22) Anmeldetag: 01.10.1998
(51) Int. Cl.: B60R 16/00, G06F 11/00

(54) **VERFAHREN ZUR FEHLERERKENNUNG VON MIKROPROZESSOREN IN STEUERGERÄTEN EINES KFZ**
METHOD FOR DETECTING ERRORS OF MICROPROCESSORS IN CONTROL DEVICES OF AN AUTOMOBILE
PROCEDE DE DETECTION D'ERREURS DE MICROPROCESSEURS D'APPAREILS DE COMMANDE DE VEHICULES AUTOMOBILES

(30) Priorität: 01.10.1997 DE 19743463
(43) Veröffentlichungstag der Anmeldung: 04.10.2000
(73) Patentinhaber: Continental Teves AG & Co. oHG, 60488 Frankfurt (DE)
(72) Erfinder: FENNEL, Helmut, D-65812 Bad Soden (DE); LATARNIK, Michael, D-61381 Friedrichsdorf (DE)
(86) Internationale Anmeldenummer: PCT/EP1998/006254
(87) Internationale Veröffentlichungsnummer: WO 2000/018613

(56) Entgegenhaltungen:
- EP-A- 0 322 141
- EP-A- 0 529 274
- EP-A- 0 575 854
- DE-A- 3 539 407
- DE-A- 4 106 257
- DE-A- 19 650 104
- GB-A- 2 255 422
- US-A- 4 590 549
- US-A- 4 791 569
- US-A- 4 864 202
- US-A- 5 339 782
- US-A- 5 436 837
- US-A- 5 440 487
- PÖTTIG W.; SCHMIDT A.: 'Universelles, sicheres und fehlertolerantes Multicontroller-System; Anwendung in einem vollautomatischen Fahrzeugleitsystem' VDI-BERICHTE 612 1986, DUESSELDORF DE, Seiten 219 - 232, XP002281130

## Beschreibung

Die Erfindung betrifft ein Verfahren zur Fehlererkennung von Mikroprozessoren in Steuergeräten eines Kraftfahrzeugs. Aus dem Artikel "VDI Berichte 612, Elektronik im Fahrzeugbau", VDI-Verlag Düsseldorf, 1986, 5.219-232 ist ein Verfahren bekannt, bei dem ein Mikroprozessor und/oder ein Datenbus mittels einer Watchdog-Schaltung überwacht wird. Dabei wird mittels einer Watchdog-Schaltung zyklisch überwacht, ob Signalimpulse auftreten, d.h. ob Daten gesendet werden. Wenn keine Signalimpulse auftreten, wird ein Fehler erkannt. Weiterhin ist es bekannt, steuergeräte mit zwei Mikroprozessoren zu versehen, die zumindest bestimmte Steuer- oder Regelaufgaben parallel bearbeiten. Aus einem Vergleich der von den beiden Mikroprozessoren gewonnen Ergebnisse kann im Falle von Abweichungen in den Ergebnissen ebenfalls ein Fehler erkannt werden.

Es ist ausßerdem bekannt, mehrere getrennte steuergeräte zur Bereitstellung von Reduludan2 im kf2 zu mutzen.

Demgegenüber ist es die Aufgabe der vorliegenden Erfindung, eine Überwachung zu verbessern, indem diese Überwachung mit einem möglichst geringen Bauteileaufwand möglich ist und gleichzeitig möglichst sichere Ergebnisse bei der Fehlererkennung liefert.

Diese Aufgabe wird erfindungsgemäß nach Anspruch 1 gelöst.

Bei dem erfindungsgemäßen Verfahren werden von dem ersten Steuergerät die zur Durchführung zumindest eines Teiles der Steuer- oder Regelaufgaben dieses Steuergerätes notwendigen Daten mittels des Datenbusses dem wenigstens einen weiteren Steuergerät zugeführt. Entsprechend dem Verfahren zur Steuerung bzw. Regelung in dem ersten Steuergerät werden die von dem ersten Steuergerät zu ermittelnden und auszugebenden Daten von dem wenigstens einen weiteren Steuergerät nachgebildet, wobei ein Fehler erkannt wird, wenn die in dem ersten Steuergerät ermittelten Daten von den von dem wenigstens einen weiteren Steuergerät ermittelten Daten abweichen.

Bei diesem Verfahren wird der Aufwand der benötigten Bauteile minimiert, weil es nicht notwendig ist, zur Überprüfung der Funktion eines Mikroprozessors einen weiteren Mikroprozessor vorzusehen, der keine weiteren Funktionen mehr wahrnimmt. Vielmehr kann mit dem Verfahren nach der Erfindung eine Funktionsprüfung vorgenommen werden durch einen Mikroprozessor, dessen Hauptaufgabe in der Steuerung bzw. Regelung einer anderen Größe besteht. Es ist möglich, die Steuer- bzw. Regelaufgabe vollständig auf einem anderen Mikroprozessor parallel verarbeiten zu lassen, dessen Hauptfunktion die Steuerung oder Regelung einer anderen Größe ist, so daß dieser Mikroprozessor in einem anderen Steuergerät angeordnet ist, oder aber nur sicherheitsrelevante Teile der Steuer- bzw. Regelaufgabe zur Kontrolle parallel laufen zu lassen.

Bei dem Verfahren werden die zur Durchführung zumindest eines Teiles der Steuer- oder Regelaufgabe des ersten Steuergerätes notwendigen Daten ebenfalls wenigstens einen weiteren Steuergerät zugeführt. Entsprechend dem Verfahren zur Steuerung bzw. Regelung in dem ersten Steuergerät werden die von dem ersten Steuergerät zu ermittelnden und gegebenenfalls auszugebenden Daten von dem wenigstens einen weiteren Steuergerät nachgebildet, wobei ein Fehler erkannt wird, wenn die in dem ersten Steuergerät ermittelten Daten von den von dem wenigstens einen weiteren Steuergerät ermittelten Daten abweichen.

Die Daten können dem wenigstens einen weiteren Steuergerät auch direkt zugeführt werden. Dadurch steigt zwar der Aufwand hinsichtlich der verkabelung, es kann aber auch der Leistungsumfang verbessert werden. Beispielsweise ist es auch möglich, verarbeitungsfehler aufgrund einer fehlerhaften Verbindung von beispielsweise einem Sensor mit dem Steuergerät festzustellen. Eine solche fehlerhafte Verbindung kann beispielsweise in einer falschen Verkabelung oder auch in einer korrodierten Kontaktierung begründet sein. Weitere Vorteile bestehen dann, wenn das fehlerhafte Steuergerät abgeschaltet und dessen Steuer- bzw. Regelaufgabe von dem wenigstens einen weiteren Steuergerät übernommen werden soll. Wenn das wenigstens eine weitere Steuergerät die Daten von dem ersten Steuergerät übermittelt bekommt, stehen diese Daten nach einem Abschalten des ersten Steuergerätes nicht mehr zur Verfügung.

Bei dem Verfahren werden außerdem die von dem ersten Steuergerät auszugebenden Daten mittels des Datenbusses von dem ersten Steuergerät an das wenigstens eine weitere Steuergerät übermittelt.

Die Kontrolle und der Vergleich der ermittelten aus zugebenden Daten wird dann gegenseitig vorgenommen.

Dasu werden die von dem ersten Steuergerät auszugebenden Daten mittels des Datenbusses von dem wenigstens einen weiteren Steuergerät an das erste Steuergerät übermittelt.

Die Kontrolle und der Vergleich der Daten wird dann also auch in dem ersten Steuergerät vorgenommen.

Bei dem Verfahren nach Anspruch 2 werden die auszugebenden Daten als Prüfsummen zusammengefaßt.

Durch die Bildung dieser Prüfsummen aus den Daten (beispielsweise durch Bilden von Quersummen o.ä) wird vorteilhaft die Datenmenge reduziert, die über den Datenbus übertragen werden muß. Dies wirkt sich besonders bei einer vielzahl von Steuergeräten aus, die sich wechselseitig überprüfen.

Bei dem verfahren nach Anspruch 3 werden die ermittelten Daten einer Plausibilitätsprüfung unterzogen. wenn eine Abweichung in den ermittelten Daten zweier Steuergeräte festgestellt wird, läßt sich anhand einer Plausibilitätsprüfung unter Umständen feststellen, welches der Steuergeräte einen Fehler aufweist. Eine Plausibilitätsprüfung kann beispielsweise darin bestehen, daß für bestimmte Größen bestimmte Grenzwerte vorgegeben sind, innerhalb der sich diese Größen befinden müssen.

Bei dem Verfahren nach Anspruch 4 wird das Steuergerät bei einem erkannten Fehler abgeschaltet.

Dadurch kann vorteilhaft die Ausgabe fehlerhafter Stellgrößen vermieden werden.

Bei dem Verfahren nach Anspruch 4 wird die Steuer- bzw. Regelaufgabe des abgeschalteten Steuergerätes von wenigstens einem anderen Steuergerät mit übernommen.

Dadurch wird vorteilhaft die Funktion aufrecht erhalten. Beim nächsten werkstattaufenthalt kann das defekte Steuergerät wieder instand gesetzt werden.

Ein Ausführungsbeispiel der Erfindung ist in der Zeichnung näher dargestellt. Es zeigt dabei im einzelnen:
- Fig. 1:: ein Ausführungsbeispiel, bei der ein Mikroprozessor eines Steuergerätes mittels einer Watchdog-Schaltung überwacht wird und
- Fig. 2:: ein Ausführungsbeispiel, bei dem sich zwei Mikroprozessoren verschiedener Steuergeräte gegenseitig bzw. selbst überwachen.

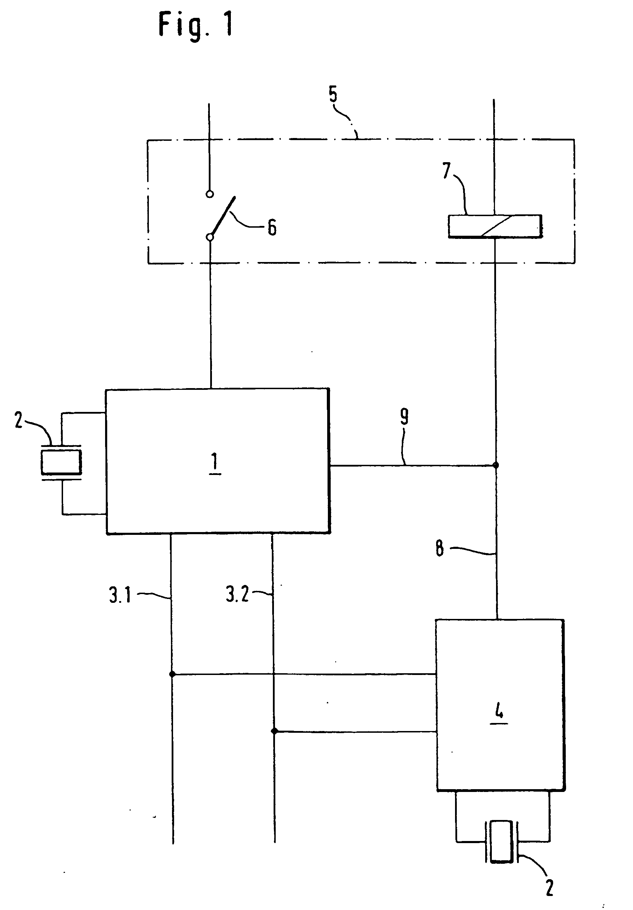

Bei dem Ausführungsbeispiel der Figur 1 ist ein Mikroprozessor 1 eines Steuergerätes mit einem Taktgeber (Quarz) 2 verbunden. Weiterhin ist der Mikroprozessor über Leitungen 3.1 und 3.2 an einen Datenbus angeschlossen, über den der Mikroprozessor mit anderen Mikroprozessoren Daten austauschen kann. Diese Leitungen 3.1 und 3.2 werden von einer Watchdog-Schaltung 4 mit einem eigenen Taktgeber 2 überwacht.

Erfindungsgemäß überwacht diese watchdog-Schaltung die Leitungen 3.1 und 3.2 nicht nur darauf, daß Signale gesendet werden sondern überwacht die von dem Mikroprozessor gesendeten Daten darauf, daß diese Daten bestimmten Signalmustern entsprechen. Die von dem Mikroprozessor ausgegebenen Daten entsprechen bestimmten Signalmustern, wenn diese Daten plausibel und richtig sind. Indem also die Watchdog-Schaltung die von dem Mikroprozessor ausgegebenen Daten auf eine Übereinstimmung mit den Signalmustern überwacht, kann mittels der Watchdog-Schaltung nicht nur ein Totalausfall des Mikroprozessors erkannt werden sondern auch ein Betriebszustand des Mikroprozessors, bei dem dieser fehlerhafte Signale erzeugt.

Wenn ein Fehler erkannt wurde, kann von der Watchdog-Schaltung 4 über eine Leitung 8 eine Abschalteinrichtung 5 angesteuert werden, bei der ein Schaltelement 7 einen steuerbaren Schalter 6 öffnet.

Wie in Figur 1 dargestellt, kann auch der Mikroprozessor 1 über die Leitung 9 und die Leitung 8 die Abschalteinrichtung 5 ansteuern und sich damit selbst abschalten, wenn der Mikroprozessor 1 - beispielsweise aufgrund einer Plausibilitätsprüfung - erkennt, daß ein Betriebsfehler vorliegt.

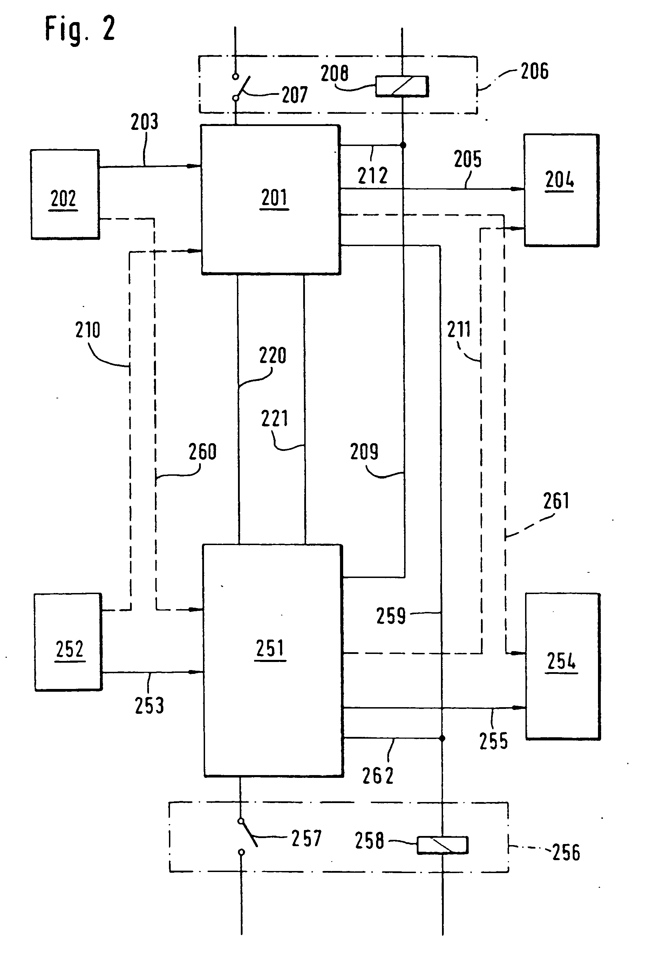

Figur 2 zeigt ein Ausführungsbeispiel, bei dem sich zwei Mikroprozessoren 201 und 251 gegenseitig und selbst überwachen. Die Mikroprozessoren sind dabei in zwei verschiedenen Steuergeräten untergebracht. Die jeweilige Hauptfunktion der Mikroprozessoren 201 und 251 besteht also in verschiedenen Steuer- bzw. Regelaufgaben.

Dem Mikroprozessor 201 werden für seine Hauptfunktion beispielsweise Signale von Sensoren zugeführt, die in der Figur 2 zusammenfassend mit dem Bezugszeichen 202 dargestellt sind. Die Signale dieser Sensoren werden dem Mikroprozessor über eine oder mehrere Signalleitungen 203 zugeführt. Weiterhin ist der Mikroprozessor 201 mit Aktuatoren verbunden, die in der Figur 2 zusammenfassend mit dem Bezugszeichen 204 dargestellt sind. Die Aktuatoren 204 werden von dem Mikroprozessor 201 über eine oder mehrere Leitungen 205 angesteuert.

Die beiden Mikroprozessoren 201 und 251 können über Leitungen 220 und 221 eines Datenbusses Daten miteinander austauschen.

Dem Mikroprozessor 251 werden für seine Hauptfunktion beispielsweise Signale von Sensoren zugeführt, die in der Figur 2 zusammenfassend mit dem Bezugszeichen 252 dargestellt sind. Die Signale dieser Sensoren werden dem Mikroprozessor über eine oder mehrere Signalleitungen 253 zugeführt. Weiterhin ist der Mikroprozessor 251 mit Aktuatoren verbunden, die in der Figur 2 zusammenfassend mit dem Bezugszeichen 254 dargestellt sind. Die Aktuatoren 254 werden von dem Mikroprozessor 251 über eine oder mehrere Leitungen 255 angesteuert.

Weiterhin sind in der Figur 2 Abschalteinrichtungen 206 und 256 zu sehen, bei deren Ansteuerung jeweils die Mikroprozessoren 201 und 251 abgeschaltet werden können. Die Abschalteinrichtungen 206 und 256 bestehen jeweils aus einem steuerbaren Schalter 207 bzw. 257 und einem Schaltelement 208 bzw. 258. Jede der Abschalteinrichtungen 206 und 256 kann vorteilhaft von beiden Mikroprozessoren 201 und 251 angesteuert werden. Dies erfolgt über die Leitungen 207 und 209 bzw. über die Leitungen 257 und 259. Dadurch ist es vorteilhafterweise möglich, daß sich jeder der Mikroprozessoren 201 und 251 bei einem erkannten Fehler selbst abschaltet als auch daß einer der Mikroprozessoren von dem anderen Mikroprozessor abgeschaltet wird, wenn dieser andere Mikroprozessor bei dem einen Mikroprozessor einen Fehler erkennt. Um den Verkabelungsaufwand zu minimieren, kann die Abschaltung auch soweit reduziert werden, daß jeder Mikroprozessor nur von einem der Mikroprozessoren abgeschaltet werden kann.

Mit der bisher beschriebenen Ausgestaltung kann einer der Mikroprozessoren 201 und 251 dem anderen Mikroprozessor über den Datenbus 220, 221 die von den jeweiligen Sensoren 202 bzw. 252 empfangenen Daten übersenden. In dem anderen Mikroprozessor kann entsprechend den dann vorliegenden Daten die Steuer- bzw. Regelaufgabe parallel bearbeitet werden. Das Ergebnis kann über den Datenbus übertragen und in einem der Mikroprozessoren 201 bzw. 251 verglichen werden. Wenn die Ergebnisse voneinander abweichen, liegt in einem der Mikroprozessoren ein Fehler vor, der eventuell aufgrund einer Plausibilitätsprüfung oder aufgrund eines Vergleiches mit dem Ergebnis eines (hier aus Gründen der Übersichtlichkeit nicht näher dargestellten) dritten Mikroprozessors lokalisiert werden kann. Der fehlerhafte Mikroprozessor kann über die Ansteuerung der entsprechenden Abschalteinrichtung 206 bzw. 256 abgeschaltet werden. Diese Abschaltung kann von dem entsprechenden Mikroprozessor selbst vorgenommen werden oder von dem anderen Mikroprozessor.

Um die Menge der zu übertragenden Daten zu minimieren, kann das Ergebnis der Steuer- bzw. Regelaufgabe zwecks des Vergleiches auch in einer oder mehreren Prüfsummen zusammengefaßt werden.

Weiterhin sind in der Darstellung der Figur 2 noch gestrichelte Linien 210 und 260 sowie 211 und 261 dargestellt.

Mittels dieser dargestellten Leitungen werden die Sensordaten unmittelbar auch jeweils dem Mikroprozessor zugeführt, dessen Hauptaufgabe nicht in der Bearbeitung der Steuer- bzw. Regelaufgabe dieser erfaßten Sensordaten besteht.

Vorteilhaft kann mit dieser Ausführungsform eventuell ein Fehler erkannt werden, der auf einem falschen Anschluß der Sensoren an dem jeweiligen Mikroprozessor beruht bzw. auf einer fehlerhaften Kontaktierung, beispielsweise aufgrund einer Korrosion des Anschlusses.

Ein weiterer Vorteil besteht darin, daß der kontrollierende Mikroprozessor die Steuer- bzw. Regelaufgabe des kontrollierten (und infolge eines erkannten Fehlers abgeschalteten) Mikroprozessors übernehmen kann, weil diesem die Daten der Sensoren weiterhin auch nach einem Abschalten des anderen Mikroprozessors zur Verfügung stehen. Bei dieser Ausführungsform sind die Aktuatoren der jeweils von den beiden Mikroprozessoren 201 und 251 auch über ebenfalls gestrichelte dargestellte Leitungen 211 und 261 von dem jeweils anderen Mikroprozessor ansteuerbar, damit bei einer Abschaltung eines Mikroprozessors aufgrund eines Fehlerfalles die Steuer- bzw. Regelaufgabe von dem jeweils anderen Mikroprozessor übernommen werden kann.

## Patentansprüche

1. verfahren zur Fehlererkennung von Mikroprozessoren (201,251) in Steuergeräten eines Kraftfahrzeugs, mit einem ersten Steuergerät (201) zur Durchführung einer Steuer- oder Regelaufgabe und wenigstens einem weiteren Steuergerät (251), wobei dem ersten Steuergerät die Signale von ersten Sensoren (202) zugeführt werden, die für die Hauptfunktion des ersten Steuergerätes vorgesehen sind und dem weiteren Steuergerät die Signale von weiteren Sensoren (252) zugeführt werden, die für die Hauptfunktion des weiteren Steuergerätes vorgesehen sind, wobei die Steuergeräte (201, 251) Daten über einen Datenbus (220, 221) austauschen und wobei die Hauptaufgabe des wenigstens einen weiteren Steuergerätes in der Steuerung bzw. Regelung einer anderen Größe besteht, wobei
die zur Durchführung zumindest eines Teils der Steuer- oder Regelaufgaben des ersten Steuergeräts (201) notwendigen und auch die zur Ansteuerung von Aktuatoren über eine oder mehrere Leitungen (205) auszugebenden Daten mittels des Datenbusses (220, 221) dem wenigstens einen weiteren Steuergerät (251) zugeführt werden, in dem zumindest ein Teil der Verarbeitung des ersten Steuergerätes parallel überprüft wird und, entsprechend dem verfahren zur Durchführung der Steuer- oder Regelaufgabe in dem ersten Steuergerät zu ermittelnden und auszugebenden Daten (205), von einem Mikroprozessor (251) des wenigstens einen weiteren Steuergeräts (251) nachgebildet werden,
wobei ein Fehler erkannt wird, wenn die in dem ersten Steuergerät (201) ermittelten auszugebenden Daten von den von dem wenigstens einen weiteren Steuergerät (251) nachgebildeten Daten abweichen, wobei ein Vergleich der ermittelten auszugebenden und der nachgebildeten Daten in dem ersten und dem wenigstens einen weiteren Steuergerät (201, 251) durchgeführt wird.

2. Verfahren nach Anspruch 1,
**dadurch gekennzeichnet, daß** die auszugebenden Daten zu einer oder mehreren Prüfsummen zusammengefaßt werden.

3. Verfahren nach einem der Ansprüche 1 und 2,
**dadurch gekennzeichnet, daß** die ermittelten Daten einer Plausibilitätsprüfung unterzogen werden.

4. Verfahren nach einem der Ansprüche 1 bis 3,
**dadurch gekennzeichnet, daß** ein Steuergerät bei einem erkannten Fehler abgeschaltet wird (5, 206, 256).

5. Verfahren nach Anspruch 4,
**dadurch gekennzeichnet, daß** die Steuer- bzw. Regelaufgabe des abgeschalteten Steuergerätes von wenigstens einem anderen Steuergerät mit übernommen wird.

## Claims

1. Method of error detection of microprocessors (201, 251) in control units of an automotive vehicle, including a first control unit (201) for executing a controlling or regulating task and at least one further control unit (251), with the signals of first sensors (202) being sent to the first control unit which are provided for the main function of the first control unit, and the signals of further sensors (252) are sent to the additional control unit which are provided for the main function of the additional control unit, with the control units (201, 251) exchanging data by way of a data bus (220, 221), and with the main task of the at least one further control unit consisting in the control or regulation of an additional quantity, wherein the data necessary for executing at least part of the controlling or regulating tasks of the first control unit (201) and also the data to be output by way of one or several conduits (205) for the purpose of actuating actuators is sent by way of the data bus (220, 221) to the at least one further control unit (251), in which at least part of the processing of the first control unit is parallel checked and the data (205) to be detected and output, corresponding to the method for executing the controlling or regulating task in the first control unit, is reproduced by a microprocessor (251) of the at least one further control unit (251), and an error is detected when the data to be output which is determined in the first control unit (201) differ from the data reproduced in the at least one further control unit (251), and a comparison of the data determined, to be output and reproduced is performed in the first and the at least one further control units (201, 251).

2. Method as claimed in claim 1,
**characterized in that** the data to be output are combined as one or more check sums.

3. Method as claimed in any one of claims 1 and 2,
**characterized in that** tthe determined data are subjected to a plausibility test.

4. Method as claimed in any one of claims 1 to 3,
**characterized in that** a control unit is deactivated (5, 206, 256) when an error is detected.

5. Method as claimed in claim 4,
**characterized in that** the controlling or regulating task of the deactivated control unit is taken over by at least one further control unit.

## Revendications

1. Procédé de détection de défauts de microprocesseurs (201, 251) d'appareils de commande d'un véhicule automobile, avec un premier appareil de commande (201) pour la mise en oeuvre d'une tâche de commande ou de régulation, et au moins un autre appareil de commande (251), dans lequel les signaux de premiers capteurs (202) qui sont prévus pour la fonction principale du premier appareil de commande sont envoyés au premier appareil de commande, les signaux d'autres capteurs (252) qui sont prévus pour la fonction principale de l'autre appareil de commande sont envoyés à l'autre appareil de commande, les appareils de commande (201, 202) échangeant des données par un bus de données (220, 221), et la tâche principale de l'autre ou des autres appareils de commande consistant dans la commande ou la régulation d'une autre grandeur, les données nécessaires à l'exécution d'au moins une partie des tâches de commande ou de régulation du premier appareil de commande (201) et également celles devant être fournies pour la commande d'actionneurs, par une ou plusieurs lignes (205), étant envoyées, au moyen du bus de données (220, 221), à l'autre ou autres appareils de commande (251) dans lequel au moins une partie du traitement du premier appareil de commande est vérifiée en parallèle et les données (205) à déterminer et à fournir, conformément au procédé de mise en oeuvre de la tâche de commande ou de régulation dans le premier appareil de commande, étant simulées par un microprocesseur (251) de au moins un des autres appareils de commande (251), un défaut étant reconnu lorsque les données à fournir, déterminées dans le premier appareil de commande (201), s'écartent des données simulées par le ou les autres appareils de commande (251), une comparaison des données déterminées à fournir et des données simulées étant effectuée dans le premier et le ou les autres appareils de commande (201, 251).

2. Procédé selon la revendication 1,
**caractérisé en ce que** les données à fournir sont réunies en une ou plusieurs sommes de vérification.

3. Procédé selon l'une des revendications 1 ou 2,
**caractérisé en ce que** les données déterminées sont soumises à un contrôle de plausibilité.

4. Procédé selon l'une des revendications 1 à 3,
**caractérisé en ce qu'**un appareil de commande est mis à l'arrêt lorsqu'un défaut est reconnu (5, 206, 256).

5. Procédé selon la revendication 4,
**caractérisé en ce que** la tâche de commande ou de régulation de l'appareil de commande mis à l'arrêt est assurée par au moins un autre appareil de commande.
